Europäisches Patentamt

**European Patent Office** ·

**Office européen des brevets**

(11) Numéro de publication: **0 057 151**
**A1**

(12)

# DEMANDE DE BREVET EUROPEEN

(21) Numéro de dépôt: **82400144.0**

(22) Date de dépôt: **27.01.82**

(51) Int. Cl.³: **A 47 J 43/046**

(30) Priorité: **28.01.81 FR 8101565**

(43) Date de publication de la demande:
**04.08.82 Bulletin 82/31**

(84) Etats contractants désignés:
**AT BE CH DE GB IT LI LU NL SE**

(71) Demandeur: **ROBOT-COUPE**
**82-84 Boulevard des Batignolles**
**F-75017 Paris(FR)**

(72) Inventeur: **Bertin, Alain Jean Luc**
**2 Place de la République**
**F-77500 Chelles(FR)**

(74) Mandataire: **Viard, Jean**
**Cabinet VIARD 28 bis, avenue Mozart**
**F-75016 Paris(FR)**

(54) Dispositif de fixation d'une cuve de robot de cuisine.

(57) Dispositif de fixation d'une cuve sur le carter d'un robot de cuisine, carter renfermant un moteur dont l'arbre émerge de la paroi du carter et traverse le fond de la cuve par une cheminée.

Selon l'invention, l'arbre (2) est entouré d'un manchon (5) présentant des encoches (7) dans lesquelles pénètrent des tenons (6), solidaires de la face interne de la cheminée (3b) de façon à réaliser un assemblage à baïonnette.

Applications: centrage et montage de la cuve plus aisés; économie de matière.

FIG.3

EP 0 057 151 A1

La présente invention a pour objet un dispositif de fixation d'une cuve sur un carter de moteur électrique, destiné en particulier, mais non exclusivement, à assujettir un bol de travail sur son socle, constitué par le carter renfermant un moteur électrique, d'un appareil de préparation des aliments ou robot de cuisine.

Différents moyens ont déjà été proposés pour obtenir une bonne fixation du bol sur le socle et sont actuellement employés. L'un de ces moyens, décrit dans le brevet français N° 71 27039, repris par de nombreux fabricants, consiste à prévoir sur la face supérieure du carter moteur une protubérance de section circulaire autour de laquelle vient s'emboiter une jupe solidaire de la cuve et prévue à la partie inférieure de celle-ci, le fond proprement dit de la cuve étant ainsi situé à une certaine hauteur au-dessus du bord inférieur de la jupe. Des moyens complémentaires d'assemblage sont prévus pour assurer la solidarisation de la cuve et de la protubérance, ces moyens pouvant consister par exemple, en des tenons solidaires de la protubérance et en des encoches correspondantes ménagées dans la paroi interne de la jupe de la cuve. Cette réalisation permet d'obtenir un positionnement précis de la cuve sur le socle, positionnement requis pour des raisons de sécurité qu'il n'apparait pas nécessaire de décrire ici.

Une autre solution consiste à former dans le socle non plus une protubérance comme précédemment, mais un trou ou alésage circulaire, à l'intérieur duquel pénètre à nouveau une jupe; la jupe étant munie sur sa surface extérieure de moyens d'assemblage pouvant coopérer avec des éléments conjugués prévus dans l'orifice. Ces moyens d'assemblage peuvent consister en un filetage male sur la jupe et femelle dans le socle ou encore en des tenons et encoches. Un exemple d'un tel assemblage est donné dans le brevet français N° 77.08648 du 23 Mars 1977.

Ces dispositifs présentent les inconvénients suivants : le centrage de la cuve autour de l'axe de l'appareil se fait toujours à la périphérie de celle-ci, ce qui peut conduire à des difficultés de montage; la fabrication tant de la cuve que du socle est rendue complexe par la nécessité de prévoir des moyens d'accrochage exactement positionnés ; le nettoyage du socle et celui de la cuve sont rendus malaisés par la présence de nombreux reliefs ; enfin, la fabrication de la jupe de la cuve et de la protubérance nécessite. une quantité de matière non indispensable.

La présente invention a pour objet de remédier à ces inconvénients et de permettre un montage aisé de la cuve ou bol sur le socle constitué par le carter du moteur d'entraînement des outils rotatifs montés à l'intérieur de la cuve.

Selon l'invention, le dispositif de fixation d'une cuve sur un carter de moteur de robot de cuisine, l'arbre dudit moteur traversant la paroi du carter et le fond de ladite cuve, une jupe entourant le trou formé dans le fond de la cuve pour permettre le passage de l'arbre, est caractérisé en ce qu' un manchon entourant l'arbre moteur fait saillie à partir de la paroi supérieure du carter, sur au moins une partie de la hauteur dudit arbre, ledit manchon portant sur sa surface extérieure des moyens d'assemblage coopérant avec des moyens correspondants formés dans la surface interne de la jupe.

Selon une autre caractéristique de l'invention, les moyens d'assemblage précités consistent en des tenons faisant saillie à partir de la surface intérieure de la jupe alors que des encoches correspondantes sont ménagées dans ledit manchon de manière à réaliser un accrochage à baïonnette par rotation de la cuve après sa mise en position.

Le dispositif de fixation selon l'invention permet ainsi d'obtenir un centrage et un bon positionnement d'une manière aisée, ce qui est particulièrement appréciable pour un matériel destiné au grand public. De plus, la paroi du carter sur laquelle prend appui la cuve peut être plane ou sensiblement plane puisque elle n'intervient plus dans

la fixation. Il en résulte, non seulement une économie de matière, mais également une plus grande facilité d'entretien, ce qui, pour le traitement de produits alimentaires est essentiel.

D'autres caractéristiques et avantages de l'invention apparaîtront au cours de la description qui va suivre d'un mode de réalisation, donné uniquement à titre d'exemple non limitatif, en regard des figures qui représentent :

- La Fig.1, un dispositif de fixation selon l'invention, en coupe par un plan vertical passant par l'axe de l'appareil;

- La Fig.2, une vue en perspective de l'extrémité supérieure du manchon, coupée par un plan horizontal;

- La Fig.3,une vue schématique en coupe d'un robot de cuisine muni d'un dispositif selon l'invention.

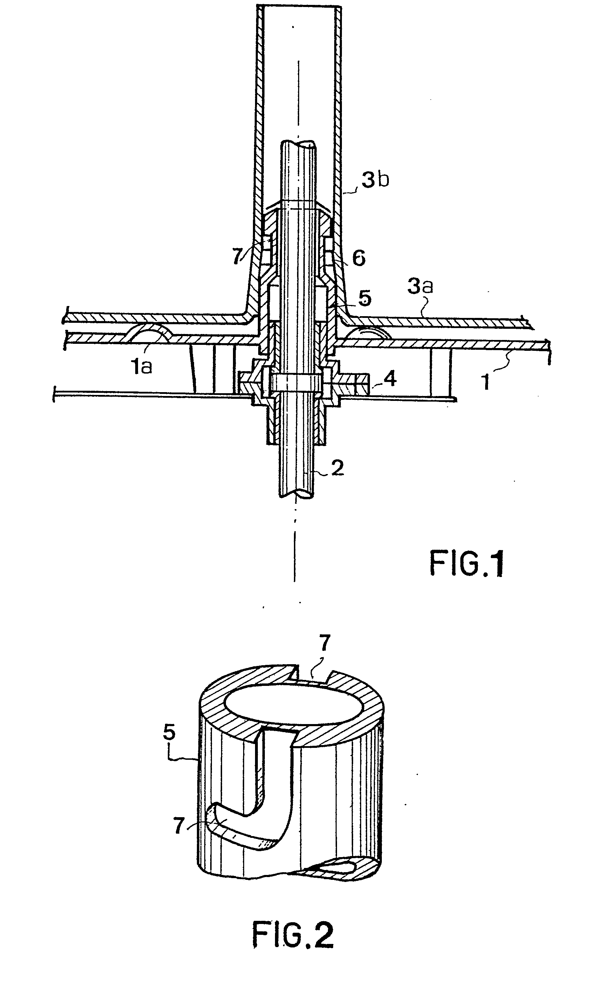

Sur la Fig.1, l'arbre moteur 2 traverse la paroi supérieure du carter 1,dont seule une partie apparaît sur la figure, et la cuve 3. Sur la Figure, ne sont représentés qu'une partie du fond 3a de la cuve et la cheminée 3b qui entoure l'arbre 2 et est destinée à assurer l'étanchéité du montage en formant une chicane.L'arbre 2 est tourilloné dans un palier 4. Selon l'invention, un manchon 5, venu par exemple de moulage, fait saillie à partir de la surface supérieure 1 du carter. Le diamètre intérieur dudit manchon est très légèrement supérieur au diamètre extérieur de l'arbre 2, de façon à permettre la libre rotation de celui-ci. Le diamètre extérieur du manchon 5 est sensiblement égal au diamètre intérieur de la jupe ou cheminée 3b de la cuve 3 de sorte que celle-ci puisse être glissée à frottement doux sur le manchon. Bien entendu, les termes de diamètre ne valent que dans la mesure où le manchon et la cheminée sont cylindriques.Si ces composants sont obtenus par moulage, il sera en général souhaitable de prévoir une dépouille. Le manchon 5 et la cheminée 3b peuvent également être coniques, sans que le procédé de fixation soit modifié.

Dans l'exemple représenté, la fixation proprement dite est obtenue par un assemblage à baïonnette qui résulte de la coopération de tenons 6 solidaires de la cheminée 3b et de rainures ou encoches 7 prévues dans le manchon 5, dont la forme apparaît plus clairement sur la Fig.2, qui représente la partie supérieure du manchon 5. Ainsi, une simple translation vers le bas de la cheminée sur le manchon, avec pénétration des tenons 6 dans les encoches 7, suivie d'une rotation de quelques degrés de la cuve, permet d'assurer un bon verrouillage de celle-ci sur le socle.

On pourrait bien entendu adopter la configuration inverse qui consisterait à disposer les tenons 6 sur le manchon et les encoches 7 à l'intérieur de la cheminée. Il va de soi que la présente invention n'est pas limitée à ce type d'assemblage et que l'on pourrait prévoir un filetage mâle ou femelle à l'extérieur du manchon et le filetage correspondant à l'intérieur de la jupe ou cheminée 3b.

De préférence, le fond 3a de la cuve 3 repose sur la paroi supérieure du socle ou carter 1, par l'intermédiaire de bossages 1a, par exemple au nombre de trois comme représenté sur les figures, qui assurent le guidage de la cuve.

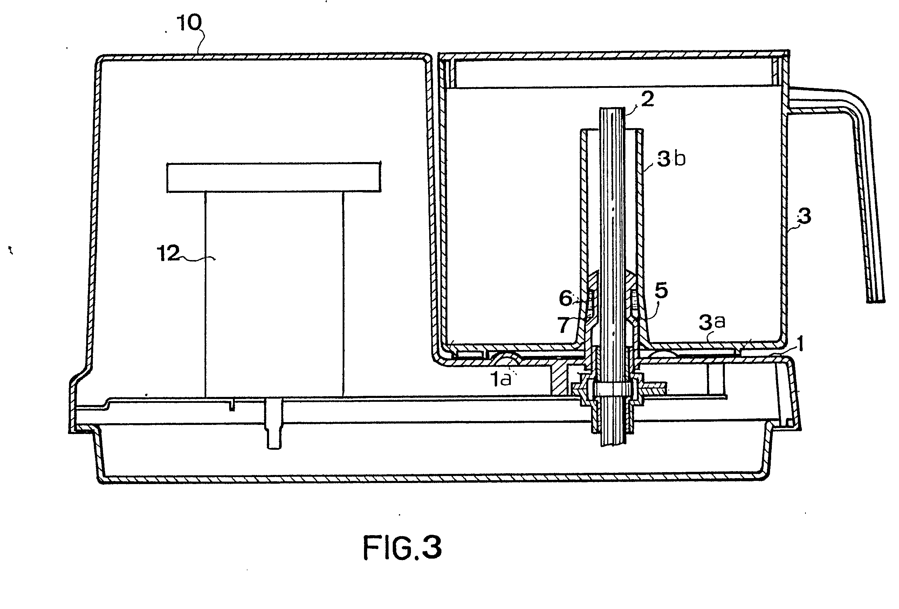

La Fig.3, représente schématiquement un robot de cuisine, dans lequel le moteur 12, inclus dans le carter 10 est disposé de sorte que son axe soit parallèle à l'axe de la cuve 3. La transmission du mouvement de l'axe du moteur à l'arbre est obtenue par une courroie (non représentée) ou par tout autre système de transmission, éventuellement multiplicateur et/ou réducteur. La cuve 3 peut présenter à sa partie inférieure une couronne circulaire qui permet, par exemple, de loger un aimant permanent de commande de sécurité. On retrouve sur cette figure les éléments décrits en regard des Figs. 1 et 2.

Bien entendu, la présente invention peut s'appliquer quelle que soit la position de la cuve par rapport au moteur et en particulier dans le cas où la cuve est disposée immédiatement au-dessus du moteur, la transmission du mouvement étant alors directe.

On notera que l'un des avantages de la présente invention consiste en la possibilité d'utilisation de cuves de diamètres différents, pouvant être adaptées à des travaux particuliers, à condition toutefois que le ou les dispositifs de sécurité soient modifiés en conséquence.

Il va de soi que la présente invention n'est nullement limitée au mode de réalisation qui vient d'être décrit et représenté et que de nombreuses variantes peuvent être introduites, notamment par substitution de moyens techniques équivalents, sans sortir pour celà du domaine de protection défini par les revendications annexées.

**0057151**

REVENDICATIONS

1° Dispositif de fixation d'une cuve ou analogue sur un carter de moteur de robot de cuisine, l'arbre dudit moteur traversant la paroi supérieure du carter et le fond de ladite cuve, une cheminée entourant l'orifice formé dans le fond de la cuve pour permettre le passage de l'arbre, caractérisé en ce qu'un manchon (5) fait saillie à partir de la face supérieure (1) du carter et entoure ledit arbre (2) sur une partie au moins de sa hauteur, ledit manchon (5) portant sur sa face extérieure des moyens d'assemblage (7) coopérant avec des moyens (6) correspondants formés dans la surface interne de ladite cheminée (3b).

2° Dispositif de fixation selon la revendication 1, caractérisé en ce que les moyens d'assemblage précités consistent en des tenons (6), d'une part et en des encoches (7) d'autre part.

3° Dispositif de fixation selon la revendication 1, caractérisé en ce que les moyens d'assemblage précités (6,7) consistent en des filetages respectivement mâle et femelle.

4° Dispositif de fixation selon la revendication 2, caractérisé en ce que les encoches (7) sont formées dans le manchon (5) les tenons (6) faisant saillie à partir de la surface interne de la cheminée (3b) de manière à réaliser un assemblage à baïonnette.

5° Dispositif de fixation selon la revendication 1, caractérisé en ce que la cheminée (3b) et le manchon (5) précités ont une section circulaire.

6° Dispositif de fixation selon la revendication 1, caractérisé en ce que la surface extérieure du manchon (5) et la surface interne de la cheminée (3b) sont coniques.

7° Dispositif de fixation selon l'une quelconque des revendications précédentes, caractérisé en ce que la cuve précitée (3) repose sur la paroi (1) du carter formant socle par l'intermédiaire de bossages (1a),

0057151

1/2

FIG.1

FIG.2

FIG.3

Office européen
des brevets

**RAPPORT DE RECHERCHE EUROPEENNE**

EP 82 40 0144

| | DOCUMENTS CONSIDERES COMME PERTINENTS | | CLASSEMENT DE LA DEMANDE (Int. Cl. ³) |
|---|---|---|---|
| Catégorie | Citation du document avec indication, en cas de besoin, des parties pertinentes | Revendica-tion concernée | A 47 J 43/046 |
| X | US - A - 2 905 452 (APPLETON) <br><br> * Colonne 3, lignes 39-42; figure 2 * | 1,4-6 | |
| A | FR - A - 1 142 514 (MERCIER) <br><br> * En entier * | 1,2,4, 5 | |
| A | US - A - 1 971 257 (FITZGERALD) <br><br> * Figure 12 * | 1,2,4, 5 | DOMAINES TECHNIQUES RECHERCHES (Int. Cl. ³) |
| A | FR - A - 2 374 001 (GENERAL ELEC-TRIC) <br><br> * Figure 2 * | 3 | A 47 J <br> B 26 B |
| A | FR - A - 2 384 986 (ROBOT-COUPE S.A.) <br><br> * Figures 1,2; page 2, lignes 4-32 * | 3 | |
| A | US - A - 2 798 700 (CORBETT et al) <br><br> * Figures 3,7; colonne 3, ligne 74 - colonne 4, ligne 3 * | 1 | CATEGORIE DES DOCUMENTS CITES |
| A | FR - A - 1 382 836 (ROTEL A.G.) <br><br> * Figures 1,3,4 * | 1 | X: particulièrement pertinent à lui seul <br> Y: particulièrement pertinent en combinaison avec un autre document de la même catégorie <br> A: arrière-plan technologique <br> O: divulgation non-écrite <br> P: document intercalaire <br> T: théorie ou principe à la base de l'invention <br> E: document de brevet antérieur, mais publié à la date de dépôt ou après cette date <br> D: cité dans la demande <br> L: cité pour d'autres raisons |
| DA | FR - A - 2 147 361 (VERDUN) <br><br> * Figures 2,3 * ./. | 7 | &: membre de la même famille, document correspondant |

| X | Le présent rapport de recherche a été établi pour toutes les revendications | | |
|---|---|---|---|
| Lieu de la recherche <br> **La Haye** | Date d'achèvement de la recherche <br> **28-04-1982** | Examinateur <br> **SCHARTZ** | |

OEB Form 1503.1   06.78

Office européen
des brevets

**RAPPORT DE RECHERCHE EUROPEENNE** EP 82 40 0144

| Catégorie | DOCUMENTS CONSIDERES COMME PERTINENTS | | CLASSEMENT DE LA DEMANDE (Int. Cl.³) |
|---|---|---|---|
| | Citation du document avec indication, en cas de besoin, des parties pertinentes | Revendica-tion concernée | |
| DA | FR - A - 2 384 476 (SOC.IND.ET FOR. DES ALLUMETTES) | | |
| | ---- | | |
| | | | **DOMAINES TECHNIQUES RECHERCHES (Int. Cl.³)** |
| | | | |